Europäisches Patentamt

**European Patent Office**

**Office européen des brevets**

(19)

(11) Numéro de publication: **0 144 278**
**A1**

(12)

# DEMANDE DE BREVET EUROPEEN

(21) Numéro de dépôt: **84460011.4**

(22) Date de dépôt: **27.11.84**

(51) Int. Cl.⁴: **A 63 H 27/08**
**B 64 C 31/06**

(30) Priorité: **01.12.83 FR 8319373**

(43) Date de publication de la demande:
**12.06.85 Bulletin 85/24**

(84) Etats contractants désignés:
**BE DE GB NL**

(71) Demandeur: **PAIMPOL VOILES S.A.R.L.**
**Quai de Kernoa B.P. 201**
**F-22500 Paimpol(FR)**

(72) Inventeur: **Hue, Daniel**
**Bourg de Kérity**
**F-22500 Paimpol(FR)**

(74) Mandataire: **Le Guen, Louis François**
**Cabinet Louis Le Guen 1, avenue Edouard VII B.P. 91**
**F-35802 Dinard Cédex(FR)**

(54) **Perfectionnements aux cerfs-volants.**

(57) Dans un cerf-volant du type "Delta", en face de l'arrière du fourreau (4) de la tige longitudinale de la carcasse, est prévue une boucle (10) élastique. La longueur de la boucle (10) est telle qu'elle est légèrement tendue quand la tige est insérée dans le fourreau (4) avec son extrémité arrière portant contre le sommet de la boucle (10).

Des moyens de liaison entre la tige transversale (5) et la voilure (1) sont constitués par des tronçons (18) de cylindre creux en matériau synthétique. La tronçon (18) est fendu transversalement sur la moitié environ dans sa zone médiane. Une extrémité du tronçon est fermée par soudure du matériau sur lui-même et l'autre extrémité (21) est fixée à la voilure (1) par simple couture.

Les fourreaux (2, 3) de tiges latérales sont constitués par une bande pliée dans le sens de la longueur, dont les bords repliés prennent en sandwich le bord de la voilure et sont cousus ensemble avec celle-ci.

FIG. 2

EP 0 144 278 A1

Perfectionnements aux cerfs-volants"

La présente invention concerne des perfectionnements apportés aux cerfs-volants, et plus particulièrement aux cerfs-volants du type "Delta".

Les carcasses des cerfs-volants Delta sont formées de trois tiges, deux latérales et une centrale, concourant vers un même point, la tige centrale étant orientée suivant la bissectrice de l'angle formé par les deux tiges latérales, et d'une quatrième tige transversale orientée perpendiculairement à la tige centrale, à une certaine distance du point de concours, les extrémités de la quatrième tige étant liées directement ou indirectement aux tiges latérales pour assurer l'ouverture de l'angle qu'elles forment. Sur cette carcasse est tendue une feuille d'étoffe ou de papier, très légère, de forme sensiblement triangulaire.

En ce qui concerne les aspects caractéristiques de la structure des cerfs-volants du type Delta, ainsi que d'autres types, on pourra se reporter à l'ouvrage anglais intitulé "KITES" par Ron Moulton et édité par Pelham Books Ltd.

Les cerfs-volants en général, et ceux du type Delta en particulier, souffrent de certains défauts ou inconvénients. Le principal défaut réside dans la fragilité aux chocs subis quand le cerf-volant pique vers le sol. On a déjà tenté - voir l'ouvrage précité, pages 159 et suivantes - de remédier à ce défaut en reculant les extrémités avant des tiges latérales par rapport à la pointe avant du cerf-volant. On crée ainsi une petite zone triangulaire relativement souple à l'avant. Toutefois, l'extrémité avant de la tige centrale supporte tout l'effort dont une partie est transmise au point de liaison entre la tige centrale et la voilure. Il en résulte que la tige centrale casse ou que sa liaison avec la voilure cède.

Un autre inconvénient tient à la complexité des moyens de liaison prévus aux extrémités de la tige transversale entre ces extrémités et la voilure. Sont en effet prévus - voir l'ouvrage mentionné ci-dessus, page 178 - des systèmes à anneaux avec extrémités de tige fendues, des systèmes à crochet et oeillets, avec des liens à ficelle entre le crochet et la tige, ou encore des poches formées par repli ou superposition de portions de tissu qui sont cousues. Les fentes aux extrémités des tiges sont des points de fragilité. Les liens à ficelle ne sont pas d'une grande fiabilité. La fabrication des poches de tissu nécessitent de nombreuses lignes de couture.

Par ailleurs, les fourreaux destinés à recevoir les tiges latérales sont confectionnés en repliant les bords de la voilure pour faire un ourlet. En pratique, autant il est facile de faire un ourlet de petite largeur, de l'ordre de 3 à 4 mm, pour empêcher l'effilochage du tissu, autant il est difficile d'assurer la largeur constante d'un ourlet de 1 à 2 cm de largeur sur une longueur de l'ordre d'un mètre, compte-tenu de la souplesse des toiles légères utilisées dans les voilures de cerfs-volants.

Un objet de la présente invention consiste à prévoir un moyen améliorant la résistance aux chocs frontaux des cerfs-volants Delta, ainsi que d'autres cerfs-volants.

Un autre objet de l'invention consiste à prévoir des moyens de liaison entre extrémités de tiges et voilure qui soient beaucoup plus simples et plus fiables que les moyens actuellement connus dans la technique.

Un autre objet de l'invention consiste à prévoir un autre moyen que l'ourlet large pour réaliser le fourreau de certaines tiges de la carcasse du cerf-volant.

Suivant une caractéristique de l'invention, il est prévu, en face de l'arrière du fourreau destiné à loger une tige longitudinale de la carcasse, une boucle fermée en matériau élastique, la longueur de la boucle étant telle qu'elle est légèrement tendue quand la tige longitudinale est insérée dans le fourreau avec son extrémité arrière portant contre le sommet de la boucle.

Suivant une autre caractéristique, la boucle est fabriquée à partir d'une bande de matériau élastique, plus large que le diamètre de la tige longitudinale.

Suivant une autre caractéristique, les moyens de liaison entre une tige et la voilure sont constitués par des tronçons de cylindre creux en matériau synthétique thermosoudable, le tronçon de cylindre étant découpé transversalement sur la moitié environ du périmètre de la section de cylindre dans sa zone médiane, une extrémité du tronçon de cylindre étant fermée par soudure du matériau sur lui-même et l'autre extrémité étant fixée à la voilure.

Suivant une autre caractéristique, le matériau thermosoudable est un textile pouvant être fixé à la toile de la voilure par simple couture.

Suivant une autre caractéristique, les fourreaux de tiges latérales sont constitués par une bande pliée dans le sens de la longueur, dont les bords repliés prennent en sandwich le bord de la voilure et sont cousus ensemble avec la voilure.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue de dessous d'un cerf-volant Delta, suivant l'invention,

la Fig. 2 est une vue de dessus du cerf-volant de la Fig. 1,

la Fig. 3 est une vue schématique de côté de la partie centrale du cerf-volant des Figs. 1 et 2,

la Fig. 4 est une vue en coupe de l'extrémité droite de la Fig. 3, suivant la ligne IV-IV,

la Fig. 5 est une vue schématique de l'extrémité arrière d'un fourreau longitudinal du cerf-volant des Figs 1 et 2, et

la Fig. 6 est une vue de dessus d'une butée d'extrémité de la tige transversale du cerf-volant des Figs. 1 et 2.

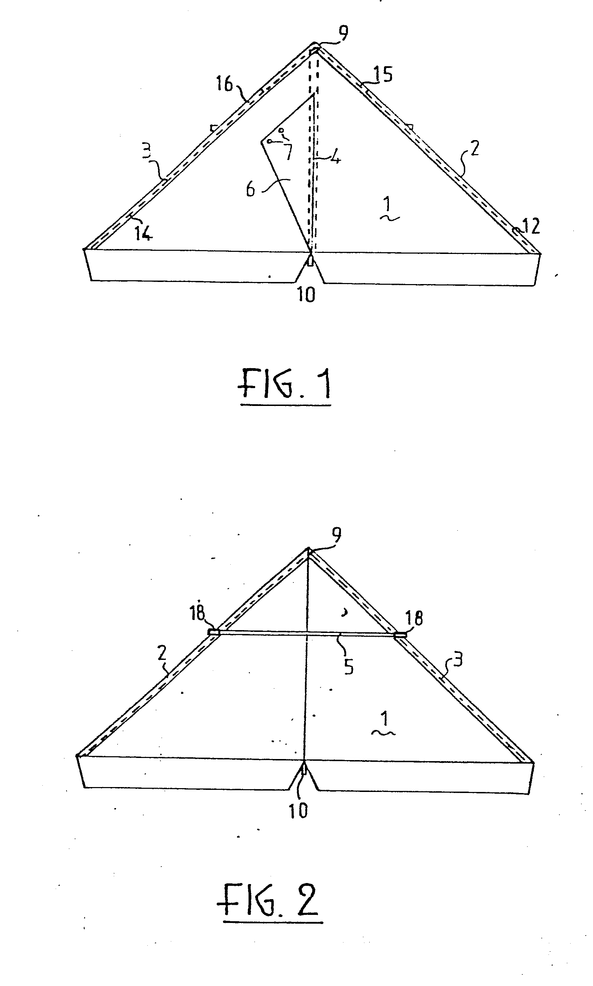

Le cerf-volant Delta des Figs. 1 et 2 comprend une toile 1, de forme générale triangulaire, comportant trois fourreaux 2, 3 et 4 dans lesquels sont enfilées les trois tiges concourantes de la carcasse. Une tige transversale 5 assure la rigidité du cerf-volant. Enfin, sous le fourreau 4, pend le dispositif de bridage constitué par un triangle de tissu 6 comportant des oeillets 7 dont l'un est choisi en fonction du vent par le cervoliste pour l'accrochage de la ficelle.

A la Fig. 3, on suppose que la tige transversale 5 a été enlevée, ce qui permet de plier la toile 1 autour du fourreau 4. Dans le fourreau 4, est enfilée la tige centrale 8 dont l'extrémité avant vient classiquement en butée sur la pointe de tissu 9 de la toile 1, laquelle est fermée par des coutures. L'extrémité arrière de la tige 8 est en contact avec la face interne d'une boucle 10, laquelle est constituée par une bande de matériau élastique dont les extrémités sont respectivement cousues en deux zones diamétralement opposées de l'extrémité arrière du fourreau 4. Les longueurs respectives de la tige 8 et de la boucle 10 sont telles que la boucle soit sous tension quand la tige 8 bute contre le fond 9. Par ailleurs, la largeur de la bande de la boucle 10 est un peu plus grande que le diamètre de la tige 8. Ainsi, la position du bout de la tige par rapport à la bande n'est pas critique.

A la Fig. 5, on a représenté le bout du fourreau latéral 2, étant entendu que l'autre fourreau latéral 3 est son symétrique. Il apparaît que le bord 11, éventuellement bordé d'un ourlet classique, est pris en sandwich entre les bords d'une bande de tissu 2 pliée en deux, les bords de la bande 2 étant cousus ensemble et avec le bord de la toile 1, le long d'une ligne 12. Une tige latérale 13 est glissée dans le fourreau ainsi formé. Comme le montre la Fig. 1 ou 2, la ligne de couture 12 sur le fourreau et la ligne de couture correspondante 14 sur le fourreau 3 existent sur toute la longueur des côtés correspondant de la voilure 1. Toutefois, il existe également deux lignes de couture courtes 15 et 16, respectivement en travers des fourreaux 2 et 3, afin de limiter leur profondeur, c'est à dire éviter que les tiges latérales n'aillent jusqu'à la pointe 9 du cerf-volant. Enfin, l'arrière de la tige latérale est fixée au fourreau 2 par une simple agrafe 17.

Il faut noter que la voilure ou toile 1 est, de préférence, en nylon, matériau qui résiste très bien à la traction, notamment à la pression du vent, mais est très sensible aux chocs lors des chutes du cerf-volant. C'est pourquoi, indépendamment des avantages, déjà mentionnés dans le préambule, apportés par le fourreau en bande plié par rapport à l'ourlet, on a choisi d'utiliser des bandes 2 et 3 en polyester qui résiste aux chocs beaucoup mieux que le nylon. A noter encore que la bande 2 ou 3 est une bande droit fil, qui ne doit pas être confondu avec la bande de biais qu'utilise la couturière pour border des pièces de tissu.

Quand le cerf-volant pique du nez et heurte le sol, la pointe 9 transmet une partie du choc à la tige 8 qui elle-même transmet cet effort à la boucle élastique 11. Donc, à ce moment, la pointe 9 recule par rapport aux tiges latérales enfilées dans les fourreaux 2 et 3, ce qui est possible car, à l'avant des lignes de couture 15 et 16, la voilure n'est raidie que par la tige 8. La boucle 10, étant élastique, absorbe particulièrement bien les chocs, ce qui évite le bris de la tige 8.

Par ailleurs, à la pointe 9, les bandes des fourreaux 2 et 3 se superposent, comme le montre la Fig. 1, ce qui a pour effet d'y créer un amortisseur formé de plusieurs couches de tissu de polyester résistant.

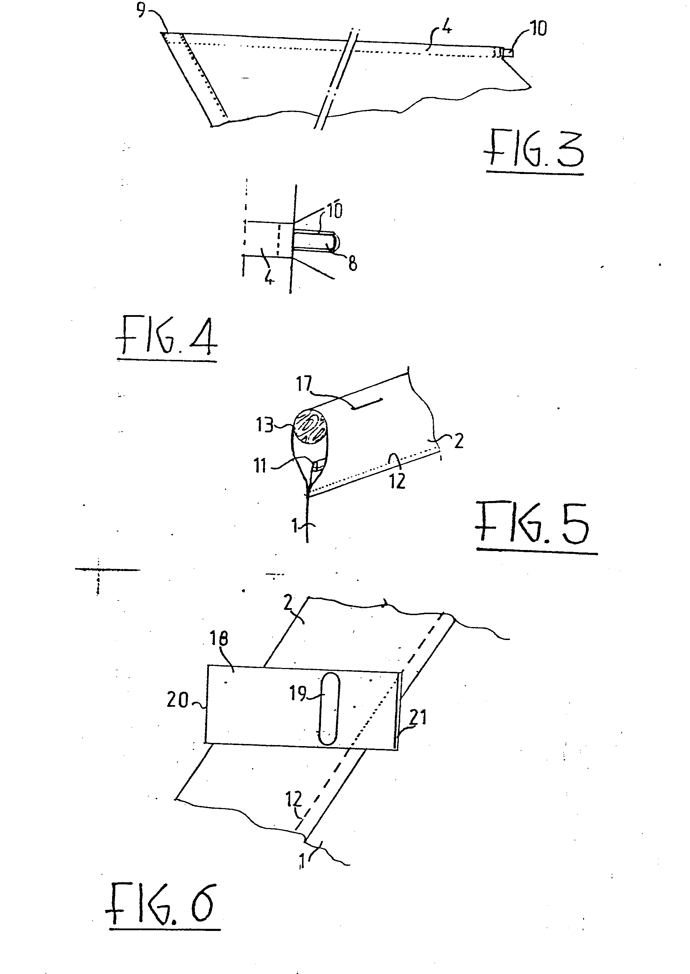

La Fig. 6 montre un organe de liaison 18 entre le fourreau 2 et l'extrémité adjacente de la tige transversale 5. L'organe 18 est constitué par un tronçon de sangle tubulaire en nylon que l'on peut trouver sur le marché. Dans sa zone médiane, le tronçon de sangle 18 est fendu de manière à créer une ouverture 19 par laquelle sera introduite l'extrémité de la tige 5. Les lèvres d'une extrémité du tronçon de sangle tubulaire sont soudées entre elles à chaud et sous pression. Cette extrémité fermée 20 du tronçon 18 est destinée à être dirigée vers l'extérieur pour servir de butée à la tige 5. L'autre extrémité 21 du tronçon écrasé, formant une double couche, est cousue au fourreau le long de la ligne 12. L'organe de liaison 18 présente l'avantage d'être simple et de travailler à la traction. De plus, le bord circulaire de l'extrémité de la tige 5, qui y est enfilé, ne porte pratiquement pas sur la soudure. La largeur de la sangle tubulaire est telle qu'elle peut recevoir sans trop de jeu l'extrémité de la tige.

Au lieu de tronçon de sangle tubulaire en nylon pour réaliser l'organe de liaison 18, on peut également utiliser des bouts de sangle de nylon simple d'une largeur de, par exemple 1 à 1,5 cm, que l'on replie partiellement, les bords latéraux du repli étant cousus pour former une sorte de petit sac destiné à recevoir une extrémité de tige. L'extrémité, non recouverte par le repli, est cousue à la voilure.

On notera encore que les fourreaux 2 et 3, réalisés dans un autre tissu que la partie principale de la voilure, permettent d'utiliser pour celle-ci un tissu d'une seule couleur, le tissu des fourreaux étant choisi d'une autre couleur pour rompre la monotonie. Cette rupture rend également le meilleur effet quand la voilure est déjà multicolore.

A noter aussi que les organes 18 rendent le montage de la tige 5 extrêment simple. Il en est de même pour le montage élastique de la tige 8. Il en résulte que, pour l'emballe, la tige 8 peut être sortie de son fourreau 4, ce qui permet de limiter la longueur du cerf-volant replié à la longueur des tiges latérales. Ainsi, quand la longueur des tiges latérales est inférieure à 1 m, le cerf-volant replié peut être expédié par la Poste.

Il faut enfin noter que la liaison élastique, les liaisons par tronçons tubulaires et les fourreaux en bande de droit fil rapportés peuvent être utilisés dans d'autres types de cerfs-volants que les cerfs-volants "Delta". Ainsi, on peut utiliser les liaisons élastiques pour protéger les tiges longitudinales de cerfs-volants cages. Les organes de liaison 18, rigides, peuvent être utilisés aux extrémité de tiges transversales ou même de tiges longitudinales.

REVENDICATIONS

1) Cerf-volant à carcasse, et particulièrement cerf-volant du type "Delta", caractérisé en ce qu'en face de l'arrière du fourreau (4) destiné à loger une tige longitudinale (8) de la carcasse, est prévue une boucle (10) en matériau élastique, la longueur de la boucle (10) étant telle qu'elle est légèrement tendue quand la tige longitudinale (8) est insérée dans le fourreau (4) avec son extrémité arrière portant contre le sommet de la boucle (10).

2) Cerf-volant suivant la revendication 1, caractérisé en ce que la boucle (10) est fabriquée à partir d'une bande dé matériau élastique, plus large que le diamètre de la tige longitudinale (8).

3) Cerf-volant suivant la revendication 1 ou 2, caractérisé en ce que les moyens de liaison entre une tige (5) et la voilure (1) sont constitués par des tronçons (18) de cylindre creux en matériau synthétique thermosoudable, le tronçon de cylindre (18) étant fendu transversalement sur la moitié environ du périmètre de la section de cylindre dans sa zone médiane, une extrémité (20) du tronçon de cylindre étant fermée par soudure du matériau sur lui-même et l'autre extrémité (21) étant fixée à la voilure (1).

4) Cerf-volant suivant la revendication 3, caractérisé en ce que le matériau thermosoudable est un textile pouvant être fixé à la voilure par simple couture.

5) Cerf-volant suivant l'une des revendications 1 à 4, caractérisé en ce que les fourreaux (2, 3) de tiges latérales sont constitués par une bande pliée dans le sens de la longueur, dont les bords repliés prennent en sandwich le bord (11) de la voilure et sont cousus ensemble avec la voilure (1).

**FIG. 1**

**FIG. 2**

0144278

FIG.3

FIG.4

FIG.5

FIG.6

Office européen
des brevets

**RAPPORT DE RECHERCHE EUROPEENNE**

**0144278**
Numéro de la demande

EP  84 46 0011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 018 407  (STAMBEL INCO.) | | A 63 H  27/08<br>B 64 C  31/06 |
| A | US-A-3 963 200  (B.R. ARNSTEIN) | | |
| A | US-A-3 534 932  (GAYLA INDUSTRIES) | | |

**DOMAINES TECHNIQUES RECHERCHES (Int. Cl.4)**

B 64 C
A 63 H

Le présent rapport de recherche a été établi pour toutes les revendications

| Lieu de la recherche | Date d'achèvement de la recherche | Examinateur |
|---|---|---|
| LA HAYE | 01-03-1985 | MARTINOZZI G.M.E. |